# EUROPEAN PATENT APPLICATION

(11) **EP 3 587 514 A1**
(43) Date of publication of application: **01.01.2020**
(21) Application number: 19180839.3
(22) Date of filing: 18.06.2019
(51) Int. Cl.: C09D 11/101, C09D 11/38, C09D 11/06, C09D 11/324, C09D 11/34

(54) **ACTINIC RADIATION-CURABLE INKJET INK, METHOD FOR PRODUCING ACTINIC RADIATION-CURABLE INKJET INK, AND IMAGE FORMING METHOD**

(30) Priority: 26.06.2018 JP 2018120452
(71) Applicant: Konica Minolta, Inc., Tokyo 100-7015 (JP)
(72) Inventor: YAMADA, Kana, Tokyo, 100-7015 (JP); MIYANO, Masashi, Tokyo, 100-7015 (JP); IKEDA, Masashi, Tokyo, 100-7015 (JP)
(74) Representative: Henkel & Partner mbB

(57) **Abstract**

The present invention relates to an actinic radiation-curable inkjet ink including a photocurable compound, a photopolymerization initiator, and an unsaturated fatty acid ester having no photopolymerizable group. The content of the unsaturated fatty acid ester is 0.3mass% or more and 4.5mass% or less based on the total mass of the inkjet ink, and the unsaturated fatty acid ester is a compound having an iodine value of less than 80.

## Description

### BACKGROUND OF THE INVENTION

### 1. Field of the Invention

The present invention relates to an actinic radiation-curable inkjet ink, a method for producing an actinic radiation-curable inkjet ink, and an image forming method.

### 2. Description of Related Art

Inkjet image forming methods are used in various printing fields because images can be simply and inexpensively formed. One inkjet image forming method is an actinic radiation-curable inkjet image forming method including allowing a droplet of an actinic radiation-curable inkjet ink to land on a recording medium, and thereafter irradiating the droplet with actinic radiation, thereby curing the droplet to form an image. Such an actinic radiation-curable inkjet image forming method has recently increasingly attracted attention because an image having high rubfastness and adhesiveness can be formed even on a recording medium having no ink absorbability.

An image-formed product with an actinic radiation-curable inkjet ink, however, may cause odor derived from a decomposed product of a photopolymerization initiator to be strongly sensed in some cases. On the contrary, Japanese Patent Application Laid-Open No. 2014-162828 describes a less odorous print which is obtained from an ink composition containing a specific photopolymerization initiator and a vegetable oil.

It has been found, however, according to studies by the present inventors that the ink composition described in Japanese Patent Application Laid-Open No. 2014-162828 is poor in stability to heat and causes the change in viscosity of the ink in storage at high temperatures, although the ink composition can be suppressed in odor of an image-formed product, caused by a decomposed product of the photopolymerization initiator.

### SUMMARY OF THE INVENTION

The present invention has been made in view of the above circumstances, and an object thereof is to provide an actinic radiation-curable inkjet ink that not only can be suppressed in odor of an image-formed product, but also is high in thermal stability, and an image forming method using the inkjet ink.

To achieve at least one of the abovementioned objects, according to an aspect of the present invention, an actinic radiation-curable inkjet ink, reflecting one aspect of the present invention comprises a photocurable compound, a photopolymerization initiator, and an unsaturated fatty acid ester having no photopolymerizable group, wherein a content of the unsaturated fatty acid ester is 0.3mass% or more and 4.5mass% or less based on a total mass of the inkjet ink, and the unsaturated fatty acid ester is a compound having an iodine value of less than 80.

To achieve at least one of the abovementioned objects, according to an aspect of the present invention, a method for producing an actinic radiation-curable inkjet ink, reflecting one aspect of the present invention comprises mixing a photocurable compound, a photopolymerization initiator, and an unsaturated fatty acid ester having no photopolymerizable group, wherein a content of the unsaturated fatty acid ester is 0.3mass% or more and 4.5mass% or less based on a total mass of the inkjet ink, and the unsaturated fatty acid ester is a compound having an iodine value of less than 80.

To achieve at least one of the abovementioned objects, according to an aspect of the present invention, an image forming method reflecting one aspect of the present invention comprises discharging a droplet of the actinic radiation-curable inkjet ink mentioned above, through a nozzle of an inkjet head, to allow the droplet to land on a surface of a recording medium, and irradiating, the droplet that has landed, with actinic radiation to cure the droplet.

An embodiment of the present invention can provide an actinic radiation-curable inkjet ink that not only can be suppressed in odor of an image-formed product, derived from a decomposed product of a photopolymerization initiator, but also is high in thermal stability, and an image forming method using the inkjet ink.

### DESCRIPTION OF THE PREFERRED EMBODIMENTS

Hereinafter, one or more embodiments of the present invention will be described. However, the scope of the invention is not limited to the disclosed embodiments.

The present inventors have found that the above problems can be solved by using an actinic radiation-curable inkjet ink in which the content of an unsaturated fatty acid ester is 0.3mass% or more and 4.5mass% or less based on the total mass of the inkjet ink and the unsaturated fatty acid ester has an iodine value of less than 80, and thus have completed the present invention.

While the reason for this is not necessarily clear, it is considered as follows. It is considered that an unsaturated fatty acid ester, after volatilization from an image-formed product, is easily dissolved in the mucosal fluid in the nasal cavity, as compared with an odorous substance derived from any decomposed product of a photopolymerization initiator, and thus is easily bound to an odorant receptor earlier than any decomposed product of a photopolymerization initiator. It is considered that the unsaturated fatty acid ester thus bound to the odorant receptor acts as an antagonist for inhibition of the action of any decomposed product of a photopolymerization initiator on the odorant receptor, thereby allowing odor due to any decomposed product of a photopolymerization initiator to be hardly sensed, or changes a combination of odorant receptors that are to react in smelling of the image-formed product, thereby allowing smell different from the odor due to any decomposed product of a photopolymerization initiator to be sensed from the image-formed product. It is considered that the unsaturated fatty acid ester thus acts as a masking agent against such an odorous substance derived from any decomposed product of a photopolymerization initiator, thereby allowing odor from the image-formed product of the actinic radiation-curable inkjet ink to be hardly sensed.

The content of the unsaturated fatty acid ester is 0.3mass% or more based on the total mass of the inkjet ink in order that the unsaturated fatty acid ester is allowed to act as a masking agent to result in a reduction in odor due to any decomposed product of a photopolymerization initiator. On the other hand, the content of the unsaturated fatty acid ester is 4.5mass% or less based on the total mass of the inkjet ink in order that odor from the image-formed product due to strong sensing of the unsaturated fatty acid ester by itself as an odorous substance is reduced.

The unsaturated fatty acid ester has an iodine value of less than 80, thereby allowing the actinic radiation-curable ink to be improved in thermal stability. While the reason for this is not necessarily clear, it is considered as follows. It is considered that an unsaturated fatty acid ester high in the iodine value and large in the amount of a double bond in its molecule causes radical to be easily generated by withdrawing of hydrogen in a fatty acid in the molecule. It is considered that the radical here generated promotes polymerization of a polymerizable compound and deteriorates thermal stability of the actinic radiation-curable ink.

It is considered, however, that the unsaturated fatty acid ester having an iodine value of less than 80 and being small in the amount of a double bond in its molecule, as in the present invention, causes less radical to be generated, does not promote any polymerization of a polymerizable compound, and enhances thermal stability of the actinic radiation-curable ink. The reason why the ink composition disclosed in Japanese Patent Application Laid-Open No. 2014-162828 is low in thermal stability is considered to be that the vegetable oil includes an unsaturated fatty acid ester having an iodine value of 80 or more. As described above, the iodine value of the unsaturated fatty acid ester in the present invention is less than 80 from the viewpoint of thermal stability of the actinic radiation-curable ink. The lower limit of the iodine value of the unsaturated fatty acid ester is not particularly limited, and may be, for example, 50 or more.

### [Actinic Radiation-Curable Inkjet Ink]

An actinic radiation-curable inkjet ink according to one embodiment of the present invention includes a photocurable compound, a photopolymerization initiator, and an unsaturated fatty acid ester having no photopolymerizable group.

### (Photocurable Compound)

The photocurable compound is not particularly limited as long as the photocurable compound is to be polymerized by actinic radiation, and examples of the photocurable compound include a radical polymerizable compound and a cationic polymerizable compound. The photocurable compound is preferably a radical polymerizable compound.

The radical polymerizable compound is a compound (monomer, oligomer, polymer, or mixture thereof) having a radical polymerizable ethylenically unsaturated bond. The radical polymerizable compound may be used singly or in combinations of two or more kinds thereof.

Examples of the compound having a radical polymerizable ethylenically unsaturated bond include an unsaturated carboxylic acid and a salt thereof, an unsaturated carboxylate compound, an unsaturated carboxylic acid urethane compound, an unsaturated carboxylic acid amide compound and an anhydride thereof, acrylonitrile, styrene, unsaturated polyester, unsaturated polyether, unsaturated polyamide, and unsaturated urethane. Examples of the unsaturated carboxylic acid include (meth)acrylic acid, itaconic acid, crotonic acid, isocrotonic acid, and maleic acid.

The radical polymerizable compound is preferably an unsaturated carboxylate compound, more preferably (meth)acrylate. Herein, "(meth)acrylate" means acrylate or methacrylate, and "(meth)acrylic" means acrylic or methacrylic.

Examples of monofunctional (meth)acrylate include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid, and t-butylcyclohexyl (meth)acrylate.

Examples of polyfunctional (meth)acrylate include bifunctional (meth)acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, PO adduct di(meth)acrylate of bisphenol A, hydroxypivalic acid neopentyl glycol di(meth)acrylate, polytetramethylene glycol di(meth)acrylate, polyethylene glycol diacrylate, and tripropylene glycol diacrylate, and tri- or higher functional (meth)acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritolethoxy tetra(meth)acrylate.

The radical polymerizable compound preferably includes ethylene oxide- or propylene oxide-modified (meth)acrylate (hereinafter, also simply referred to as "modified (meth)acrylate".). The modified (meth)acrylate is higher in photosensitivity. The modified (meth)acrylate is more easily compatible with other component even at high temperatures. Furthermore, the modified (meth)acrylate is less shrunk in curing and thus a print is more hardly curled in irradiation with actinic radiation.

Examples of the cationic polymerizable compound include an epoxy compound, a vinyl ether compound, and an oxetane compound.

Examples of the epoxy compound include alicyclic epoxy resins such as 3,4-epoxycyclohexylmethyl-3',4'-epoxycyclohexanecarboxylate, bis(3,4-epoxycyclohexylmethyl)adipate, vinylcyclohexene monoepoxide, ε-caprolactone-modified 3,4-epoxycyclohexylmethyl 3',4'-epoxycyclohexanecarboxylate, 1-methyl-4-(2-methyloxiranyl)-7-oxabicyclo[4,1,0]heptane, 2-(3,4-epoxycyclohexyl-5,5-spiro-3,4-epoxy)cyclohexanone-meta-dioxane, and bis(2,3-epoxycyclopentyl)ether, aliphatic epoxy compounds including diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propylene glycol, and polyglycidyl ether of polyether polyol, which is obtained by adding one or more alkylene oxides (ethylene oxide, propylene oxide, and the like) to an aliphatic polyhydric alcohol such as ethylene glycol, propylene glycol, and glycerin, and aromatic epoxy compounds including di- or polyglycidyl ether of bisphenol A or an alkylene oxide adduct thereof, di- or polyglycidyl ether of hydrogenated bisphenol A or an alkylene oxide adduct thereof, and a novolac type epoxy resin.

Examples of the vinyl ether compound include monovinyl ether compounds including ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether, and di- or trivinyl ether compounds including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, and trimethylolpropane trivinyl ether.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1,4bis{[(3-ethyl-3-oxetanyl)methoxy]methyl}benzene, 3-ethyl-3-(2-ethylhexyloxymethyl)oxetane, and di[1-ethyl(3-oxetanyl)]methyl ether.

The content of the photocurable compound is preferably 1mass% or more and 97mass% or less, more preferably 10mass% or more and 95mass% or less, further preferably 30mass% or more and 95mass% or less based on the total mass of the actinic radiation-curable ink.

### (Photopolymerization initiator)

The photopolymerization initiator can be a radical photo-initiator in the case where the actinic radiation-curable inkjet ink contains a radical polymerizable compound as a photopolymerization compound, and the photopolymerization initiator can be a photo-acid generator in the case where the actinic radiation-curable inkjet ink contains a cationic polymerizable compound as a photopolymerization compound.

Examples of the radical polymerization initiator include a cleavage-type radical polymerization initiator and a hydrogen abstraction-type radical polymerization initiator.

Examples of the cleavage-type radical polymerization initiator include acetophenone-based initiators including diethoxyacetophenone, 2-hydroxy-2-methyl-1-phenylpropan-1-one, benzil dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenyl ketone, 2-methyl-2-morpholino(4-thiomethylphenyl)propan-1-one, and 2-benzyl-2-dimethylamino-1-(4-morpholinophenyl)-butanone, benzoin-based initiators including benzoin, benzoin methyl ether, and benzoin isopropyl ether, acyl phosphine oxide-based initiators including 2,4,6-trimethylbenzoin diphenylphosphine oxide, benzil, and methyl phenyl glyoxy ester.

Examples of the hydrogen abstraction-type radical polymerization initiator include benzophenone-based initiators including benzophenone, o-benzoyl benzoic acid methyl-4-phenylbenzophenone, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, and 3,3'-dimethyl-4-methoxybenzophenone, thioxanthone-based initiators including 2-isopropylthioxanthone, 2,4-dimethylthioxanthone, 2,4-diethylthioxanthone, and 2,4-dichlorothioxanthone, aminobenzophenone-based initiators including Michler's ketone and 4,4'-diethylaminobenzophenone, 10-butyl-2-chloroacridone, 2-ethylanthraquinone, 9,10-phenanthrenequinone, and camphorquinone.

Examples of the photo-acid generator include a triarylsulfonium hexafluorophosphate salt, iodonium (4-methylphenyl)(4-(2-methylpropyl)phenyl)hexafluorophosphate, triarylsulfonium hexafluoroantimonate, and 3-methyl-2-butenyltetramethylenesulfonium hexafluoroantimonate.

The content of the photopolymerization initiator is preferably 0.1mass% or more and 10mass% or less, more preferably 1mass% or more and 8mass% or less, further preferably 1mass% or more and 5mass% or less based on the total mass of the actinic radiation-curable ink.

### (Unsaturated Fatty Acid Ester)

The unsaturated fatty acid ester is not particularly limited as long as it is a compound where an alcohol or sugar and an unsaturated fatty acid are linked via an ester group. Herein, the photopolymerizable group means a functional group that is started to be polymerized by irradiation with actinic radiation, and specifically means a radical polymerizable ethylenically unsaturated bond located at an end of the unsaturated fatty acid.

Examples of the alcohol include a monohydric alcohol, a dihydric alcohol, a trihydric alcohol, a tetrahydric alcohol, and a pentahydric alcohol. The alcohol may be a lower alcohol or a higher alcohol. The alcohol may also be a sugar alcohol.

Examples of the monohydric alcohol include methanol, ethanol, 1-propanol, 2-propanol, 1-butanol, 2-butanol, 2,2-dimethyl-1-propanol, 2-methyl-1-propanol, 2,2-dimethyl-1-propanol, 2-methyl-2-propanol, 2-methyl-1-butanol, 3-methyl-1-butanol, 2-methyl-2-butanol, 3-methyl-2-butanol, 1-pentanol, 2-pentanol, 3-pentanol, cyclopentanol, cyclopentenol, glycidol, tetrahydrofurfuryl alcohol, tetrahydro-2H-pyran-4-ol, 2-methyl-3-buten-2-ol, 3-methyl-2-buten-2-ol, 3-methyl-3-buten-2-ol, 1-cyclopropylethanol, l-penten-3-ol, 3-penten-2-ol, 4-penten-1-ol, 4-penten-2-ol, 3-pentyn-1-ol, 4-pentyn-1-ol, propargyl alcohol, allyl alcohol, hydroxyacetone, and 2-methyl-3-butyn-2-ol.

Examples of the dihydric alcohol include ethane-1,2-diol, propane-1,2-diol, propane-1,3-diol, dihydroxyacetone, thioglycerol, 2-methylpropane-1,3-diol, 2-butyne-1,4-diol, 3-butene-1,2-diol, butane-2,3-diol, butane- 1,4-diol, butane-1,3-diol, butane-1,2-diol, 2-butene-1,4-diol, 1,2-cyclopentanediol, 3-methylbutane-1,3-diol, 2,2-dimethylpropane-1,3-diol, 4-cyclopentene-1,3-diol, cyclopentane-1,2-diol, 2,2-dimethylpropane-1,3-diol, pentane-1,2-diol, pentane-2,4-diol, pentane-1,5-diol, 4-cyclopentene-1,3-diol, 2-methylenepropane-1,3-diol, 2,3-dihydroxy-1,4-dioxane, and 2,5-dihydroxy-1,4-dithiane.

Examples of the trihydric alcohol include glycerol, erythrulose, butane-1,2,4-triol, erythrose, threose, trimethylolethane, and 2-hydroxymethylpropane-1,3-diol.

Examples of the tetrahydric alcohol include erythritol, threitol, pentaerythritol, arabinose, ribose, xylose, ribulose, xylulose, lyxose, ascorbic acid, gluconic acid-γ-lactone, and sorbitan.

Examples of the pentahydric alcohol include arabitol, adonitol, and xylitol.

Examples of the sugar include sucrose, glucose, and raffinose.

Examples of the unsaturated fatty acid include a C₂₋₄ short-chain unsaturated fatty acid (lower unsaturated fatty acid), a C₅₋₁₁ medium-chain unsaturated fatty acid, and a C₁₂₋₃₀ long-chain unsaturated fatty acid (higher unsaturated fatty acid). The unsaturated fatty acid is preferably a long-chain unsaturated fatty acid, more preferably a C₁₄₋₂₅ unsaturated fatty acid from the viewpoint of odor suppression.

The double bond in the unsaturated fatty acid is not particularly limited in terms of the number and the position thereof, and the unsaturated fatty acid may be any of a mono-unsaturated fatty acid, a di-unsaturated fatty acid, a tri-unsaturated fatty acid, a tetra-unsaturated fatty acid, a penta-unsaturated fatty acid, a hexa-unsaturated fatty acid, and a polyvalent unsaturated fatty acid having seven or more double bonds. Herein, the unsaturated fatty acid preferably has one or more and three or less double bonds, more preferably one double bond from the viewpoint of odor suppression.

Examples of the mono-unsaturated fatty acid include crotonic acid, myristoleic acid, palmitoleic acid, sapienic acid, oleic acid, elaidic acid, vaccenic acid, gadoleic acid, eicosenoic acid, erucic acid, and nervonic acid.

Examples of the di-unsaturated fatty acid include linoleic acid, eicosadienoic acid, and docosadienoic acid.

Examples of the tri-unsaturated fatty acid include linolenic acid, pinolenic acid, eleostearic acid, mead acid, dihomo-γ-linolenic acid, and eicosatrienoic acid.

Examples of the tetra-unsaturated fatty acid include stearidonic acid, arachidonic acid, eicosatetraenoic acid, and adrenic acid.

Examples of the penta-unsaturated fatty acid include bosseopentaenoic acid, eicosapentaenoic acid, osbond acid, clupanodonic acid, and tetracosapentaenoic acid.

Examples of the hexa-unsaturated fatty acid include docosahexaenoic acid and Nisinic acid.

In the case where the unsaturated fatty acid ester is a compound where a di- or higher-hydric alcohol and the unsaturated fatty acid are linked via an ester group, the unsaturated fatty acid ester may be a compound where all hydroxy groups in the alcohol are esterified with the unsaturated fatty acid, or a compound where two or more hydroxy groups are esterified with the unsaturated fatty acid.

Preferable examples of the unsaturated fatty acid ester include butyl oleate, sorbitan monooleate, sorbitan trioleate, (Z)-9-octadecenoic acid 2,2-bis(hydroxymethyl)butyl ester, methyl cis-11-eicosenoate, methyl erucate, and methyl nervonate.

The unsaturated fatty acid ester is preferably a compound having a molecular weight of 500 or less, further preferably a compound having a molecular weight of 450 or less from the viewpoint of being volatilized from the image-formed product and thus easily reaching an odorant receptor. The lower limit of the molecular weight of the unsaturated fatty acid ester is not particularly limited, and can be 100. The molecular weight of a dispersant can be defined as a weight average molecular weight in terms of styrene as measured by GPC.

The unsaturated fatty acid ester is preferably a compound having an iodine value of less than 80, further preferably less than 70. The iodine value of the unsaturated fatty acid ester is less than 80, resulting in an enhancement in thermal stability of the actinic radiation-curable ink. The lower limit of the iodine value of the unsaturated fatty acid ester is not particularly limited, and can be 50 or more.

The iodine value of the unsaturated fatty acid ester here means the number of grams of iodine absorbed in 100 g of the unsaturated fatty acid ester. The iodine value can be a value obtained by measurement according to JIS L 3331.

The content of the unsaturated fatty acid ester is 0.3mass% or more and 4.5mass% or less, preferably 0.4mass% or more and 3.0mass% or less, more preferably 0.6mass% or more and 2.8mass% or less based on the total mass of the inkjet ink. The content of the unsaturated fatty acid ester is 0.3mass% or more based on the total mass of the inkjet ink, resulting in a reduction in odor due to any decomposed product of the photopolymerization initiator. The content of the unsaturated fatty acid ester is 4.5mass% or less based on the total mass of the inkjet ink, thereby enabling odor from the image-formed product, due to sensing of the unsaturated fatty acid ester itself as an odorous substance, to be reduced.

The content of the unsaturated fatty acid ester is preferably a content so that the ratio of the total mass of the photopolymerization initiator to the total mass of the unsaturated fatty acid ester (total mass of photopolymerization initiator/total mass of unsaturated fatty acid ester) is 0.3 or more and 8 or less. The ratio is 0.3 or more, thereby enabling odor from the image-formed product, due to sensing of the unsaturated fatty acid ester itself as an odorous substance, to be reduced. The ratio is 8 or less, thereby allowing the content of the unsaturated fatty acid ester to be sufficient relative to the content of the photopolymerization initiator and thus enabling odor derived from any decomposed product of the photopolymerization initiator to be sufficiently reduced at the action of the unsaturated fatty acid ester as a masking agent. The content of the unsaturated fatty acid ester is preferably a content so that the ratio is 0.3 or more and 5.0 or less, more preferably a content so that the ratio is 0.3 or more and 3.0 or less, from the above viewpoints.

The content of the unsaturated fatty acid ester is preferably a content so that the content of a saturated fatty acid ester based on the total amount of the saturated fatty acid ester and the unsaturated fatty acid ester is less than 5mass%.

### (Gelling Agent)

The actinic radiation-curable inkjet ink may include a gelling agent. The gelling agent in the present invention is defined as a "compound which is an organic substance in the form of a solid at normal temperature and in the form of a liquid due to heating and which has the function of allowing for reversible sol-gel phase transition of the actinic radiation-curable inkjet ink depending on the temperature".

The gelling agent is preferably crystallized in the ink at a temperature equal to or less than the gelation temperature of the ink from the following viewpoint. The gelling agent may be crystallized in the ink to thereby allow the photocurable compound to be encapsulated in a three-dimensional space formed by the gelling agent crystallized in the form of a plate (hereinafter, referred to such a structure as a "card house structure".). Such a card house structure is formed to thereby keep the photocurable compound in the form of a liquid in the space, thereby more hardly causing an ink droplet to be wet and spread, resulting in a more enhancement in pinning properties of the ink. Such an enhancement in pinning properties of the ink hardly causes ink droplets having landed on a recording medium, to coalesce each other, and enables a finer image to be formed.

The gelling agent crystallized, while is higher in compatibility with the unsaturated fatty acid ester, is lower in compatibility with any decomposed product of the photopolymerization initiator. Thus, the gelling agent crystallized, while does not so inhibit volatilization of the unsaturated fatty acid ester, easily inhibits volatilization of any decomposed product of the photopolymerization initiator. Thus, the actinic radiation-curable inkjet ink includes the gelling agent, thereby allowing odor derived from any decomposed product of the photopolymerization initiator to be suppressed with the masking effect due to the unsaturated fatty acid ester being promoted.

The photocurable compound and the gelling agent dissolved in the ink are preferably compatible each other from the viewpoint that the card house structure is easily formed. On the contrary, the card house structure may be hardly formed if the photocurable compound and the gelling agent dissolved in the ink are in phase separation.

Examples of a gelling agent suitable for formation of the card house structure by crystallization include ketone wax, ester wax, petroleum-based wax, vegetable-based wax, animal-based wax, mineral-based wax, hardened castor oil, modified wax, a higher fatty acid, a higher alcohol, hydroxystearic acid, fatty acid amides including an N-substituted fatty acid amide and a specific fatty acid amide, a higher amine, a sucrose fatty acid ester, synthetic wax, dibenzylidene sorbitol, a dimer acid, and a dimer diol.

Examples of the ketone wax include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

Examples of the ester wax include behenyl behenate, icosyl icosanoate, stearyl stearate, palmityl stearate, cetyl palmitate, myristyl myristate, cetyl myristate, myricyl cerotate, stearyl stearate, oleyl palmitate, glycerin fatty acid ester, sorbitan fatty acid ester, propylene glycol fatty acid ester, ethylene glycol fatty acid ester, and polyoxyethylene fatty acid ester.

Examples of the petroleum-based wax include petroleum-based waxes including paraffin wax, microcrystalline wax, and petrolatum.

Examples of the vegetable-based wax include candelilla wax, carnauba wax, rice bran wax, sumac wax, jojoba oil, jojoba solid wax, and jojoba ester.

Examples of the animal-based wax include beeswax, lanolin, and spermaceti.

Examples of the mineral-based wax include montan wax and hydrogenated wax.

Examples of the modified wax include a montan wax derivative, a paraffin wax derivative, a microcrystalline wax derivative, a 12-hydroxystearic acid derivative, and a polyethylene wax derivative.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

Examples of the hydroxystearic acid include 12-hydroxystearic acid.

Examples of the fatty acid amide include lauric acid amide, stearic acid amide, behenic acid amide, oleic acid amide, erucic acid amide, ricinolic acid amide, and 12-hydroxystearic acid amide.

Examples of the N-substituted fatty acid amide include N-stearylstearic acid amide and N-oleylpalmitic acid amide.

Examples of the specific fatty acid amide include N,N'-ethylenebisstearamide, N,N'-ethylenebis-12-hydroxystearamide, and N,N'-xylylenebisstearamide.

Examples of the higher amine include dodecylamine, tetradecylamine, and octadecylamine.

Examples of the sucrose fatty acid ester include sucrose stearic acid and sucrose palmitic acid.

Examples of the synthetic wax include polyethylene wax and α-olefin-maleic anhydride copolymer wax.

Examples of the dibenzylidene sorbitol include 1,3:2,4-bis-O-benzylidene-D-glucitol.

Among these gelling agents, ketone wax, ester wax, a higher fatty acid, a higher alcohol, and a fatty acid amide are preferable from the viewpoint of a more enhancement in pinning properties, and ketone wax represented by the following General Formula (G1) and ester wax represented by the following General Formula (G2) are further preferable from the above viewpoint. The ketone wax represented by the following General Formula (G1) and the ester wax represented by the following General Formula (G2) may be each included in the inkjet ink only singly or in combination of two or more kinds thereof. Alternatively, only any one of or both the ketone wax represented by the following General Formula (G1) and the ester wax represented by the following General Formula (G2) may be included in the inkjet ink.

General Formula (G1): R1-CO-R2

In General Formula (G1), R1 and R2 each represent a linear or branched C₉₋₂₅ hydrocarbon group.

General Formula (G2): R3-COO-R4

In General Formula (G2), R3 and R4 each represent a linear or branched C₉₋₂₅ hydrocarbon group.

The ketone wax represented by General Formula (G1) or the ester wax represented by General Formula (G2) has a linear or branched C_{9 or more} hydrocarbon group, resulting in a more enhancement in crystallinity of the gelling agent and the occurrence of a more sufficient space in the card house structure. Thus, the photocurable compound is easily encapsulated sufficiently in the space and pinning properties of the ink are more enhanced. Moreover, such wax has a linear or branched C_{25 or less} hydrocarbon group, resulting in no excessive increase in the solation temperature of the ink and thus no need for excessive heating of the ink in ejection of the ink. R1 and R2 each particularly preferably represent a linear C₁₁₋₂₃ hydrocarbon group from the above viewpoint.

Either R1 or R2, or either R3 or R4 preferably represents a saturated C₁₁₋₂₃ hydrocarbon group from the viewpoint that the gelation temperature of the ink is increased for rapid gelation of the ink after landing. Both R1 and R2, or both R3 and R4 more preferably represent a saturated C₁₁₋₂₃ hydrocarbon group from the above viewpoint.

Examples of the ketone wax represented by General Formula (G1) include dilignoceryl ketone (C₂₃₋₂₄), dibehenyl ketone (C₂₁₋₂₂), distearyl ketone (C₁₇₋₁₈), dieicosyl ketone (C₁₉₋₂₀), dipalmityl ketone (C₁₅₋₁₀), dimyristyl ketone (C₁₃₋₁₄), dilauryl ketone (C₁₁₋₁₂), laurylmyristyl ketone (C₁₁₋₁₄), lauryl palmityl ketone (C₁₁₋₁₆), myristyl palmityl ketone (C₁₃₋₁₆), myristyl stearyl ketone (C₁₃₋₁₈), myristyl behenyl ketone (C₁₃₋₂₂), palmityl stearyl ketone (C₁₅₋₁₈), palmityl behenyl ketone (C₁₅₋₂₂), and stearyl behenyl ketone (C₁₇₋₂₂). Herein, the number of carbon atoms in brackets represents the number of carbon atoms in each of two hydrocarbon groups decoupled by a carbonyl group.

Examples of the fatty acid or the ester wax represented by General Formula (G2) include behenyl behenate (C₂₁₋₂₂), icosyl icosanoate (C₁₉₋₂₀), stearyl stearate (C₁₇₋₁₈), palmityl stearate (C₁₇₋₁₆), lauryl stearate (C₁₇₋₁₂), cetyl palmitate (C₁₅₋₁₆), stearyl palmitate (C₁₅₋₁₈), myristyl myristate (C₁₃₋₁₄), cetyl myristate (C₁₃₋₁₆), octyldodecyl myristate (C₁₃₋₂₀), stearyl oleate (C₁₇₋₁₈), stearyl erucate (C₂₁₋₁₈), stearyl linoleate (C₁₇₋₁₈), behenyl oleate (C₁₈₋₂₂), and arachidyl linoleate (C₁₇₋₂₀). Herein, the number of carbon atoms in brackets represents the number of carbon atoms in each of two hydrocarbon groups decoupled by an ester group.

The content of the gelling agent is preferably 1.0mass% or more and 7.0mass% or less based on the total mass of the actinic radiation-curable ink. The content of the gelling agent is 1.0mass% or more to thereby enable pinning properties of the ink to be sufficiently enhanced, resulting in not only formation of a finer image, but also easy suppression of coalescence between adjacent droplets. Moreover, the content of the gelling agent is 1.0mass% or more, thereby enabling volatilization of any decomposed product of the photopolymerization initiator to be suppressed, to thereby enhance the masking effect due to the unsaturated fatty acid ester, resulting in a more reduction in odor from the image-formed product. The content of the gelling agent is 7.0mass% or less to thereby enable ejection properties of the ink from an inkjet head to be more enhanced. Moreover, the content of the gelling agent is 7.0mass% or less, thereby enabling the thickness of a crystal of the gelling agent to be proper, to thereby allow volatilization of the unsaturated fatty acid ester to be hardly suppressed by the gelling agent crystallized. The content of the gelling agent in the inkjet ink is preferably 1.0mass% or more and 5.0mass% or less, more preferably 1.2mass% or more and 5.0mass% or less, further preferably 1.5mass% or more and 3.0mass% or less from the above viewpoint.

### (Other Component(s))

The actinic radiation-curable inkjet ink may further include, if necessary, a colorant including a pigment and a dye, a dispersant and a dispersion aid for dispersion of the pigment, a photo-initiator aid, a polymerization inhibitor, a surfactant other than the unsaturated fatty acid ester, a leveling additive, a matting agent, an ultraviolet absorber, an infrared absorber, an antibacterial agent, a basic compound for an enhancement in storage stability of the ink, and the like.

The colorant can be a dye or a pigment, and is preferably a pigment because a pigment has favorable dispersibility in the constituent components of the ink and is excellent in weather resistance.

The pigment is not particularly limited, and can be, for example, any organic pigment or any inorganic pigment described in the color index and numbered as follows.

Examples of a red or magenta pigment include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of a blue or cyan pigment include Pigment Blue 1, 15, 15:1, 15:2, 15:3, 15:4, 15:6, 16, 17-1, 22, 27, 28, 29, 36 and 60. Examples of a green pigment include Pigment Green 7, 26, 36, and 50.

Examples of a yellow pigment include Pigment Yellow 1,3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193. Examples of a black pigment include Pigment Black 7, 28, and 26.

Examples of commercially available products of such pigments include Chromofine Yellow 2080, 5900, 5930, AF-1300, and 2700L, Chromofine Orange 3700L and 6730, Chromofine Scarlet 6750, Chromofine Magenta 6880, 6886, 6891N, 6790, and 6887, Chromofine Violet RE, Chromofine Red 6820 and 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P, Chromofine Green 2GN, 2GO, 2G-550D, 5310, 5370, and 6830, Chromofine Black A-1103, Seikafast Yellow 10GH, A-3, 2035, 2054, 2200, 2270, 2300, 2400(B), 2500, 2600, ZAY-260, 2700(B), and 2770, Seikafast Red 8040, C405(F), CA120, LR-116, 1531B, 8060R, 1547, ZAW-262, 1537B, GY, 4R-4016, 3820, 3891, and ZA-215, Seikafast Carmine 6B1476T-7, 1483LT, 3840, and 3870, Seikafast Bordeaux 10B-430, Seikalight Rose R40, Seikalight Violet B800, 7805, Seikafast Maroon 460N, Seikafast Orange 900 and 2900, Seikalight Blue C718, A612, and Cyanine Blue 4933M, 4933GN-EP, 4940, and 4973 (manufactured by Dainichiseika Color & Chemicals Mfg. Co., Ltd.);
KET Yellow 401, 402, 403, 404, 405, 406, 416, and 424, KET Orange 501, KET Red 301, 302, 303, 304, 305, 306, 307, 308, 309, 310, 336, 337, 338, and 346, KET Blue 101, 102, 103, 104, 105, 106, 111, 118, and 124, and KET Green 201 (manufactured by DIC Corporation);
Colortex Yellow 301, 314, 315, 316, P-624, 314, U10GN, U3GN, UNN, UA-414, and U263, Finecol Yellow T-13 and T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, and USN, Colortex Maroon 601, Colortex Brown B610N, Colortex Violet 600, Pigment Red 122, Colortex Blue 516, 517, 518, 519, A818, P-908, and 510, Colortex Green 402 and 403, and Colortex Black 702 and U905 (manufactured by Sanyo Color Works, LTD.);
Lionol Yellow 1405G, Lionol Blue FG7330, FG7350, FG7400G, FG7405G, ES, and ESP-S (manufactured by Toyo Ink Co., Ltd.), and Toner Magenta E02, Permanent Rubin F6B, Toner Yellow HG, Permanent Yellow GG-02, and Hostapeam Blue B2G (manufactured by Hoechst Industry Limited.);
Novoperm P-HG, Hostaperm Pink E, and Hostaperm Blue B2G (manufactured by Clariant); and
Carbon Black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

Examples of the dispersant include a hydroxyl group-containing carboxylate, a salt of a long-chain polyaminoamide and a high molecular weight acid ester, a salt of a high molecular weight polycarboxylic acid, a salt of a long-chain polyaminoamide and a polar acid ester, a high molecular weight unsaturated acid ester, a macromolecular copolymer, modified polyurethane, modified polyacrylate, a polyether ester-type anionic activator, a naphthalenesulfonic acid-formalin condensate salt, an aromatic sulfonic acid-formalin condensate salt, a polyoxyethylene alkyl phosphoric acid ester, polyoxyethylene nonyl phenyl ether, and stearylamine acetate. Examples of a commercially available product of the dispersant include Solsperse series from Avecia and PB series from Ajinomoto Fine-Techno Co., Inc.

The total amount of the dispersant and the dispersion aid is preferably 1mass% or more and 50mass% or less relative to the pigment.

The dye can be, for example, an oil-soluble dye. Examples of the oil-soluble dye include various dyes bellow. Examples of a magenta dye include MS Magenta VP, MS Magenta HM-1450, and MS Magenta HSo-147 (all are manufactured by Mitsui Toatsu Kagaku K.K.), AIZEN SOT Red-1, AIZEN SOT Red-2, AIZEN SOT Red-3, AIZEN SOT Pink-1, and SPIRON Red GEH SPECIAL (all are manufactured by Hodogaya Chemical Co., Ltd.), RESOLIN Red FB 200%, MACROLEX Red Violet R, and MACROLEX ROT 5B (all are manufactured by Bayer Japan), KAYASET Red B, KAYASET Red 130, and KAYASET Red 802 (all are manufactured by Nippon Kayaku Co., Ltd.), PHLOXIN, ROSE BENGAL, and ACID Red (all are manufactured by Daiwakasei Co., Ltd.), HSR-31 and DIARESIN Red K (all are manufactured by Mitsubishi Kasei Corporation), and Oil Red (manufactured by BASF Japan Ltd.).

Examples of a cyan dye include MS Cyan HM-1238, MS Cyan HSo-16, Cyan HSo-144, and MS Cyan VPG (all are manufactured by Mitsui Toatsu Kagaku K.K.), AIZEN SOT Blue-4 (manufactured by Hodogaya Chemical Co., Ltd.), RESOLIN BR. Blue BGLN 200%, MACROLEX Blue RR, CERES Blue GN, SIRIUS SUPRA TURQ. Blue Z-BGL, and SIRIUS SUPRA TURQ. Blue FB-LL 330% (all are manufactured by Bayer Japan), KAYASET Blue FR, KAYASET Blue N, KAYASET Blue 814, Turq. Blue GL-5200, and Light Blue BGL-5 200 (all are manufactured by Nippon Kayaku Co., Ltd.), DAIWA Blue 7000 and Oleosol Fast Blue GL (all are manufactured by Daiwakasei Co., Ltd.), DIARESIN Blue P (manufactured by Mitsubishi Kasei Corporation), and SUDAN Blue 670, NEOPEN Blue 808, and ZAPON Blue 806 (all are manufactured by BASF Japan Ltd.).

Examples of a yellow dye include MS Yellow HSm-41, Yellow KX-7, and Yellow EX-27 (Mitsui Toatsu Kagaku K.K.), AIZEN SOT Yellow-1, AIZEN SOT YelloW-3, and AIZEN SOT Yellow-6 (all are manufactured by Hodogaya Chemical Co., Ltd.), MACROLEX Yellow 6G and MACROLEX FLUOR. Yellow 10GN (all are manufactured by Bayer Japan), KAYASET Yellow SF-G, KAYASET Yellow 2G, KAYASET Yellow A-G, and KAYASET Yellow E-G (all are manufactured by Nippon Kayaku Co., Ltd.), DAIWA Yellow 330HB (manufactured by Daiwakasei Co., Ltd.), HSY-68 (manufactured by Mitsubishi Kasei Corporation), and SUDAN Yellow 146 and NEOPEN Yellow 075 (all are manufactured by BASF Japan Ltd.).

Examples of a black dye include MS Black VPC (manufactured by Mitsui Toatsu Kagaku K.K.), AIZEN SOT Black-1 and AIZEN SOT Black-5 (all are manufactured by Hodogaya Chemical Co., Ltd.), RESORIN Black GSN 200% and RESOLIN Black BS (all are manufactured by Bayer Japan), KAYASET Black A-N (manufactured by Nippon Kayaku Co., Ltd.), DAIWA Black MSC (manufactured by Daiwakasei Co., Ltd.), HSB-202 (manufactured by Mitsubishi Kasei Corporation), and NEPTUNE Black X60 and NEOPEN Black X58 (all are manufactured by BASF Japan Ltd.).

The content of the pigment or the dye is preferably 0.1mass% or more and 20mass% or less, more preferably 0.4mass% or more and 10mass% or less relative to the actinic radiation-curable inkjet ink.

The photo-initiator aid may be a tertiary amine compound, and is preferably an aromatic tertiary amine compound. Examples of the aromatic tertiary amine compound include N,N-dimethylaniline, N,N-diethylaniline, N,N-dimethyl-p-toluidine, N,N-dimethylamino-p-benzoic acid ethyl ester, N,N-dimethylamino-p-benzoic acid isoamyl ethyl ester, N,N-dihydroxyethylaniline, trimethylamine, and N,N-dimethylhexylamine. In particular, N,N-dimethylamino-p-benzoic acid ethyl ester and N,N-dimethylamino-p-benzoic acid isoamyl ethyl ester are preferable. Such compounds may be used singly or in combinations of two or more kinds thereof.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

Examples of the surfactant include a fluorine-based surfactant, a silicone-based surfactant, an anionic surfactant, and a nonionic surfactant other than the unsaturated fatty acid ester.

Examples of the basic compound include basic organic compounds such as a basic alkali metal compound, a basic alkali earth metal compound, and amine.

### (Physical Properties)

The viscosity at 25°C of the actinic radiation-curable inkjet ink is preferably 2 mPa·s or more and 50 mPa·s or less. The viscosity of the actinic radiation-curable inkjet ink, in the temperature range of 20°C or more and less than 100°C, corresponding to the ink temperature in discharging through an inkjet head, is preferably 7 mPa·s or more and 15 mPa·s or less, more preferably 8 mPa·s or more and 13 mPa·s or less.

The viscosity at 80°C of the actinic radiation-curable inkjet ink which contains the gelling agent is preferably 3 mPa·s or more and 20 mPa·s or less, more preferably 6.0 mPa·s or more and 15.0 mPa·s or less, further preferably 7.0 mPa·s or more and 12.0 mPa·s or less. On the contrary, the viscosity at normal temperature of the ink after landing is preferably equal to or more than a certain value in order to suppress coalescence between adjacent ink droplets. Specifically, the viscosity at 25°C of the actinic radiation-curable inkjet ink which contains the gelling agent is preferably 1,000 mPa·s or more.

The viscosity at 25°C, the viscosity at 80°C, and the gelation temperature of the actinic radiation-curable inkjet ink can be determined by measuring a temperature change in dynamic viscoelasticity of the ink with a rheometer. Specifically, a temperature change curve of the viscosity is obtained where the ink is heated to 100°C and then cooled to 25°C in conditions of a shear rate of 11.7 (1/s) and a rate of temperature drop of 0.1°C/s. The viscosity at 80°C and the viscosity at 25°C can be each read and thus determined. The gelation temperature can be determined as a temperature at which the viscosity is 200 mPa·s in the temperature change curve of the viscosity.

The rheometer usable can be a stress control-type rheometer of Physica MCR series manufactured by Anton Paar GmbH. The diameter of a cone plate can be 75 mm, and the cone angle can be 1.0°.

### [Method for Producing Actinic Radiation-Curable Inkjet Ink]

A method for producing an actinic radiation-curable inkjet ink according to another embodiment of the present invention include mixing a photocurable compound, a photopolymerization initiator, and an unsaturated fatty acid ester having no photopolymerizable group. A gelling agent may be mixed at the same time as such mixing or at the same time as mixing of other component(s) described above. The resulting mixed liquid including the gelling agent is preferably subjected to filtration by a predetermined filter. The respective components are here preferably mixed with being heated in order to enhance the solubility of the gelling agent and the like.

The respective components to be here mixed preferably each have a high purity. In particular, the purity of the unsaturated fatty acid ester is preferably 95% or more, more preferably 97% or more, further preferably 99% or more.

Herein, a dispersion including a pigment and a dispersant may be prepared in advance and residual components may be added thereto and mixed therewith. The dispersion is also preferably prepared by mixing the pigment and the dispersant with heating, in order to enhance the solubility of the dispersant and the like.

Such preparation of the dispersion can be performed by, for example, a ball mill, a sand mill, an attritor, a roll mill, an agitator, a Henschel mixer, a colloid mill, an ultrasound homogenizer, a pearl mill, a wet jet mill, and a paint shaker. Such preparation of the dispersion is preferably performed so that a particle of the pigment has an average particle size of 0.08 µm or more and 0.5 µm or less and a maximum particle size of 0.3 µm or more and 10 µm or less, preferably 0.3 µm or more and 3 µm or less.

### [Image Forming Method]

An image forming method according to another embodiment of the present invention includes 1) discharging a droplet of the actinic radiation-curable inkjet ink through a nozzle of an inkjet recording apparatus, to allow the droplet to land on a surface of a recording medium, and 2) irradiating the droplet of the actinic radiation-curable inkjet ink having landed on the recording medium, with actinic radiation, to cure the droplet of the actinic radiation-curable inkjet ink.

### (Step 1)

Step 1 is to discharge a droplet of an inkjet ink through an inkjet head, to allow the droplet to land on a position of a recording medium, the position corresponding to an image to be formed.

The system of discharge through the inkjet head may be either of an on-demand system and a continuous system. The inkjet head of the on-demand system may be any of electromechanical transduction systems of a single cavity type, a double cavity type, a bender type, a piston type, a share mode type, a shared-wall type, and the like, and thermoelectric transduction systems of a thermal inkjet type, a Bubble Jet (Bubble Jet is a registered trademark of Canon Inc.) type, and the like.

Such an ink droplet can be enhanced in discharge stability due to discharge through the inkjet head under heating. The temperature of the ink in discharge is preferably 35°C or more and 100°C or less, and is more preferably 35°C or more and 80°C or less for a more enhancement in discharge stability. In particular, the ink is preferably ejected at an ink temperature so that the viscosity of the ink is 7 mPa·s or more and 15 mPa·s or less, more preferably 8 mPa·s or more and 13 mPa·s or less.

In the case where the actinic radiation-curable inkjet ink includes the gelling agent, the temperature of the ink packed in the inkjet head is preferably set to a temperature of +10°C or more and +30°C or less from the gelation temperature of the ink in order to enhance discharge properties of the ink through the inkjet head. A temperature of the ink in the inkjet head, of less than +10°C from the gelation temperature, causes the ink to form a gel in the inkjet head or on the surface of a nozzle, easily resulting in deterioration in discharge properties of the ink. On the contrary, a temperature of the ink in the inkjet head, of more than +30°C from the gelation temperature, may cause the ink to be at a too high temperature, resulting in degradation of the components of the ink.

The method for heating the ink is not particularly limited. The ink can be heated by heating at least any of, for example, an ink feed system including an ink tank constituting a head carriage, a feed pipe, and a front chamber ink tank immediately before the head, a pipe provided with a filter, and a piezo head, by a panel heater, a ribbon heater, temperature-retaining water, and the like.

The amount of the ink droplet in discharge is preferably 2 pL or more and 20 pL or less from the viewpoint of the recording rate and the image quality.

The recording medium is not particularly limited, and the recording medium usable can be any of not only generally non-coated paper, coated paper, and the like, but also synthetic paper YUPO (R), and various plastics and films thereof for use in soft packaging. Examples of such various plastic films include a PP film, a PET film, an OPS film, an OPP film, an ONy film, a PVC film, a PE film, and a TAC film. Other plastics usable can be polycarbonate, an acrylic resin, ABS, polyacetal, PVA, rubber, and the like. Metals and glass can also be used.

The temperature of the recording medium in landing of the ink droplet is preferably controlled to 20°C or more and 40°C or less from the viewpoint of gelation of the ink.

### (Step 2)

Step 2 is to irradiate the ink landed on the recording medium in Step 1, with actinic radiation, to form an image including a cured film of the ink.

The actinic radiation can be selected from, for example, electron beam, ultraviolet light, α-ray, γ-ray, and X-ray, and is preferably ultraviolet light, and such irradiation is preferably made with light having a peak wavelength of 360 nm or more and 410 nm or less, from a LED light source. Examples of the LED light source include a water-cooled LED (peak wavelength: 395 nm) manufactured by Phoseon Technology, Inc. LEDs generate less radiation heat than conventional light sources (such as a metal halide lamp). Accordingly, the ink is hardly molten to hardly cause the variation in gloss to occur in irradiation with the actinic radiation.

In the case of irradiation with light having a peak wavelength of 360 nm or more and 410 nm or less, the peak illuminance on the surface of the recording medium or the surface of the ink droplet is preferably 0.5 W/cm² or more and 10.0 W/cm² or less, preferably 1.0 W/cm² or more and 5.0 W/cm² or less.

Such irradiation with the actinic radiation is preferably performed between 0.001 seconds and 1.0 second after landing of the ink on the recording medium, and is more preferably performed between 0.001 seconds and 0.5 seconds after the landing, for formation of a highly fine image.

On the other hand, such irradiation with the actinic radiation may also be separately performed at two stages. In this case, the ink can be irradiated with the actinic radiation between 0.001 seconds and 2.0 seconds after landing of the ink on the recording medium and thus the ink can be temporarily cured, and the ink can be further irradiated with the actinic radiation and thus actually cured after completion of the entire printing. Such irradiation with the actinic radiation is separated to two stages, thereby hardly causing curing shrinkage of the ink to occur.

### Examples

Hereinafter, specific Examples of the present embodiment will be described together with Comparative Examples. It is noted that the technical scope of the present invention is not limited to only the following Examples.

### 1. Adjustment of Actinic Radiation-Curable Inkjet Ink

### [Photocurable Compound]

The following was used in the photocurable compound included in the inkjet ink.
- Material A: EO-modified neopentyl glycol diacrylate
- Material B: trimethylolpropane triacrylate

### [Photopolymerization Initiator]

The following was used in the photopolymerization initiator included in the inkjet ink.
- 2,4,6-Trimethylbenzoyldiphenylphosphine oxide (Speedcure TPO: manufactured by Lambson Limited)
- Isopropylthioxanthone (Speedcure ITX, manufactured by Lambson Limited)

### [Pigment]

The following was used in the pigment included in the inkjet ink.
- Carbon black (Carbon Black MA7: manufactured by Mitsubishi Chemical Corporation)

### [Dispersant]

The following was used in the dispersant included in the inkjet ink.
- Solsperse 28000 (manufactured by Lubrizol Corporation)

### [Polymerization Inhibitor]

The following was used in the polymerization inhibitor included in the inkjet ink.
- Irgastab UV10 (manufactured by Ciba Japan K.K.)

### [Surfactant]

The following was used in the surfactant included in the inkjet ink.
- KF-352 (manufactured by Shin-Etsu Chemical Co., Ltd.)

### [Unsaturated Fatty Acid Ester]

The following was used in the unsaturated fatty acid ester included in the inkjet ink.
- Butyl oleate (manufactured by FUJIFILM Wako Pure Chemical Corporation)
- Sorbitan monooleate (manufactured by Kao Corporation)
- Sorbitan trioleate (manufactured by FUJIFILM Wako Pure Chemical Corporation)

### [Vegetable Oil]

The following was used in the vegetable oil included in the inkjet ink.
- Corn oil (manufactured by Wako Pure Chemical Industries, Ltd.): amount of unsaturated fatty acid: 86mass%

### [Gelling Agent]

The following was used in the gelling agent included in the inkjet ink.
- Stearyl stearate (manufactured by Kao Corporation)

### 2. Preparation by Mixing, and Rating

### [Preparation of Dispersion Liquid]

A stainless beaker was charged with 8 parts by mass of the dispersant, and 72 parts by mass of dipropylene glycol diacrylate (DPGA) (Laromer DPGDA, manufactured by BASF SE) being a photocurable compound, as a solvent, and the resultant was stirred with heating on a hot plate at 65°C for 1 hour. The mixed liquid was cooled to room temperature, and furthermore 20 parts by mass of the pigment was added. The solution was placed, together with 200 g of zirconia beads having a diameter of 0.5 mm, into a glass bottle, the bottle was plugged, and the solution was subjected to a dispersing treatment by a paint shaker for 5 hours. Thereafter, the zirconia beads were removed, and a dispersion liquid was obtained.

### [Preparation of Ink]

The above respective components were mixed according to each composition in Table 1 to Table 3, and heated to 80°C and stirred. The solution obtained was filtered through a 3-µm membrane filter of Teflon (R) manufactured by ADVANTEC with heating, thereby providing inks 1 to 10 of Examples and inks 1 to 7 of Comparative Examples. Herein, numerical values with respect to each component in the Tables are represented based on "mass%".

### [Rating of Thermal Stability of Ink]

Inks 1 to 10 of Examples and inks 1 to 7 of Comparative Examples, obtained, were each loaded, in a volume of 6 ml, into a screw cap test tube (NMT-18 manufactured by Maruemu Corporation, having a volume of 9 ml) made of hard glass, and stored at 100°C for 2 weeks. Thereafter, each of the inks heated and stored was placed in a temperature-controllable, stress control-type rheometer (Physica MCR300, manufactured by Anton Paar GmbH), and the viscosity v_{A} (mPa·s) at 80°C was measured. The viscosity v_{B} of each of the inks stored at normal temperature (25°C) for 2 weeks was measured, and the value of the change in viscosity due to the presence or absence of heating in storage, Δv = |v_{A} - v_{B}| (mPa·s), was calculated to thereby rate the thermal stability of each of the inks on a four-point scale as follows.
A: No change in viscosity 0 ≤ Δv <0.5
B: Almost no change in viscosity 0.5 ≤ Δv ≤ 1
C: A clear increase in viscosity 1 < Δv
D: Unmeasurable of viscosity due to ink solidification after storage with heating

### [Formation of Image]

Inks 1 to 10 of Examples and inks 1 to 7 of Comparative Examples were each packed in a single-pass inkjet recording apparatus including an inkjet recording head provided with a piezo-type inkjet nozzle. An ink feed system included an ink tank, an ink passage, a sub ink tank immediately before the inkjet recording head, a pipe provided with a filter, and a piezo head, and the temperature of the inkjet head was set to 80°C.

The temperature of the inkjet head of the inkjet recording apparatus was set to 50°C. A droplet of each of the inks, discharged through each nozzle of the inkjet head, landed on a recording medium (OK Top Coat, unit basis weight: 128 g/m², manufactured by Oji Paper Co., Ltd.). An image of the droplet landed was irradiated with ultraviolet light by a LED lamp (395 nm, water-cooled LED manufactured by Phoseon Technology, Inc.) disposed downstream of the inkjet head, thereby curing each of the inks.

The recording head for discharge, here used, was a piezo head having a nozzle diameter of 20 µm and a number of nozzles of 1,024 (512 nozzles × 2 rows, staggered arrangement, a nozzle pitch of nozzles of 600 dpi per row). An ink composition was ejected at a droplet rate of about 6 m/s in a discharge condition so that the amount of one droplet was 3.0 pl, and recording was made at a resolution of 1,200 dpi × 1,200 dpi. Formation of an image was performed under an environment of 23°C and 55% RH. Herein, "dpi" represents the number of dots per 2.54 cm.

### [Rating of Odor]

The image-formed product obtained as above was stored in a glass bottle provided with a lid, the lid was opened after 24 hours, and odor was rated by 10 raters based on the total point on a four-point scale as follows.
- Four-point scale
   4 points: Almost no odor
   3 points: Odor which was slight, but almost ignorable
   2 points: Odor which was moderate, but acceptable
   1 points: Strong odor
- Rating of odor based on the total points by 10 raters
   A: 40 points to 35 points
   B: 34 points to 25 points
   C: 24 points to 15 points
   D: 14 points to 10 points

**[Table 1]**

| | | | | | Example | | | | | |
|---|---|---|---|---|---|---|---|---|---|---|
| | | | | | 1 | 2 | 3 | 4 | 5 | 6 |
| Photocurable compound | Material A | | | | 60% | 59% | 60% | 60% | 59% | 60% |
| | Material B | | | | 26.15% | 26.15% | 26.15% | 26.15% | 26.15% | 26.15% |
| Photopolymerization initiator | SPEEDCURE TPO | | | | 2% | 2% | | 2% | 2% | |
| | SPEEDCURE ITX | | | | 1% | 1% | 1% | 1% | 1% | 1% |
| Dispersion liquid | Pigment | | Carbon black MA7 | | 2.0% | 2.0% | 2.0% | 2.0% | 2.0% | 2.0% |
| | Dispersant | | Solsperse 28000 | | 0.8% | 0.8% | 0.8% | 0.8% | 0.8% | 0.8% |
| | Solvent (photocurable compound) | | DPGA | | 7.2% | 7.2% | 7.2% | 7.2% | 7.2% | 7.2% |
| Polymerization inhibitor | Irgastab UV10 | | | | 0.25% | 0.25% | 0.25% | 0.25% | 0.25% | 0.25% |
| Surfactant | KF-352 | | | | 0.1% | 0.1% | 0.1% | 0.1% | 0.1% | 0.1% |
| Unsaturated fatty acid ester | | Molecular weight | Number of unsaturated bonds | Iodine value | | | | | | |
| | Butyl oleate | 338.6 | 1 | 75.0 | 0.5% | 1.5% | 2.5% | | | |
| | Sorbitan monooleate | 428.6 | 1 | 59.3 | | | | 0.5% | 1.5% | 2.5% |
| | Sorbitan trioleate | 957.5 | 3 | 79.6 | | | | | | |
| Vegetable oil (glyceride) | Corn oil | | | 103-130 | | | | | | |
| Gelling agent | Stearyl stearate | | | | | | | | | |
| Total | | | | | 100% | 100% | 100% | 100% | 100% | 100% |
| Photopolymerization initiator/unsaturated fatty acid ester | | | | | 6.00 | 2.00 | 0.40 | 6.00 | 2.00 | 0.40 |
| Rating results | Thermal stability | | | | A | A | A | A | A | A |
| | Odor | | | | B | A | A | B | A | A |

| | | | | | | | | | | |
|---|---|---|---|---|---|---|---|---|---|---|
| Material A: EO-modified neopentyl glycol diacrylate Material B: Trimethylolpropane triacrylate | | | | | | | | | | |

**[Table 2]**

| | | | | | Example | | | |
|---|---|---|---|---|---|---|---|---|
| | | | | | 7 | 8 | 9 | 10 |
| Photocurable compound | Material A | | | | 58% | 59% | 59% | 58% |
| | Material B | | | | 25.15% | 26.15% | 25.65% | 26.15% |
| Photopolymerization initiator | SPEEDCURE TPO | | | | 2% | 2% | | 3% |
| | SPEEDCURE ITX | | | | 1% | 1% | 1% | 2% |
| Dispersion liquid | Pigment | | Carbon black MA7 | | 2.0% | 2.0% | 2.0% | 2.0% |
| | Dispersant | | Solsperse 28000 | | 0.8% | 0.8% | 0.8% | 0.8% |
| | Solvent (photocurable compound) | | DPGA | | 7.2% | 7.2% | 7.2% | 7.2% |
| Polymerization inhibitor | Irgastab UV10 | | | | 0.25% | 0.25% | 0.25% | 0.25% |
| Surfactant | KF-352 | | | | 0.1% | 0.1% | 0.1% | 0.1% |
| Unsaturated fatty acid ester | | Molecular weight | Number of unsaturated bonds | Iodine value | | | | |
| | Butyl oleate | 338.6 | 1 | 75.0 | 0.5% | | 4% | 0.5% |
| | Sorbitan monooleate | 428.6 | 1 | 59.3 | | | | |
| | Sorbitan trioleate | 957.5 | 3 | 79.6 | | 1.5% | | |
| Vegetable oil (glyceride) | Corn oil | | | 103-130 | | | | |
| Gelling agent | Stearyl stearate | | | | 3% | | | |
| Total | | | | | 100% | 100% | 100% | 100% |
| Photopolymerization initiator/unsaturated fatty acid ester | | | | | 6.00 | 2.00 | 0.25 | 10.00 |
| Rating results | Thermal stability | | | | A | A | A | A |
| | Odor | | | | A | C | C | C |

| | | | | | | | | |
|---|---|---|---|---|---|---|---|---|
| • Material A: EO-modified neopentyl glycol diacrylate Material B: Trimethylolpropane triacrylate | | | | | | | | |

**[Table 3]**

| | | | | | Comparative Example | | | | | | |
|---|---|---|---|---|---|---|---|---|---|---|---|
| | | | | | 1 | 2 | 3 | 4 | 5 | 6 | 7 |
| Photocurable compound | Material A | | | | 59% | 59% | 59% | 59% | 59% | 59% | 59% |
| | Material B | | | | 26.45% | 27.45% | 22.65% | 27.45% | 22.65% | 29.45% | 24.65% |
| Photopolymerization initiator | SPEEDCURE TPO | | | | 2% | 2% | 2% | 2% | 2% | | |
| | SPEEDCURE ITX | | | | 1% | 1% | 1% | 1% | 1% | 1% | 1% |
| Dispersion liquid | Pigment | Carbon black MA7 | | | 2.0% | 2.0% | 2.0% | 2.0% | 2.0% | 2.0% | 2.0% |
| | Dispersant | Solsperse 28000 | | | 0.8% | 0.8% | 0.8% | 0.8% | 0.8% | 0.8% | 0.8% |
| | Solvent (photocurable compound) | DPGA | | | 7.2% | 7.2% | 7.2% | 7.2% | 7.2% | 7.2% | 7.2% |
| Polymerization inhibitor | Irgastab UV10 | | | | 0.25% | 0.25% | 0.25% | 0.25% | 0.25% | 0.25% | 0.25% |
| Surfactant | KF-352 | | | | 0.1% | 0.1% | 0.1% | 0.1% | 0.1% | 0.1% | 0.1% |
| Unsaturated fatty acid ester | | Molecular weight | Number of unsaturated bonds | Iodine value | | | | | | | |
| | Butyl oleate | 338.6 | 1 | 75.0 | | 0.2% | 5.0% | | | | |
| | Sorbitan monooleate | 428.6 | 1 | 59.3 | | | | 0.2% | 5.0% | | |
| | Sorbitan trioleate | 957.5 | 3 | 79.6 | | | | | | 0.2% | 5.0% |
| Vegetable oil (glyceride) | Corn oil | | | 103-130 | 1.2% | | | | | | |
| Gelling agent | Stearyl stearate | | | | | | | | | | |
| Total | | | | | 100% | 100% | 100% | 100% | 100% | 100% | 100% |
| Photopolymerization initiator/unsaturated fatty acid ester | | | | | 2.90 | 15.00 | 0.60 | 15.00 | 0.60 | 5.00 | 0.20 |
| Rating results | Thermal stability | | | | D | A | A | A | A | A | A |
| | Odor | | | | A | D | D | D | D | D | D |

| | | | | | | | | | | | |
|---|---|---|---|---|---|---|---|---|---|---|---|
| Material A: EO-modified neopentyl glycol diacrylate Material B: Trimethylolpropane triacrylate | | | | | | | | | | | |

Inks 1 to 10 of Examples, each containing a photocurable compound, a photopolymerization initiator, and an unsaturated fatty acid ester having no photopolymerizable group, in which the content of the unsaturated fatty acid ester was 0.3mass% or more and 4.5mass% or less based on the total mass of the inkjet ink and the unsaturated fatty acid ester had an iodine value of less than 80, could allow for formation of an image higher in thermal stability and less in odor than an image formed from ink 1 of Comparative Example, containing a vegetable oil.

Inks 2, 4, and 6 of Comparative Examples, in which the content of the unsaturated fatty acid ester was less than 0.3mass% based on the total mass of the inkjet ink, was low in the reduction effect of odor and could not allow for suppression of odor of an image-formed product. On the other hand, inks of Comparative Examples 3, 5, and 7, in which the content of the unsaturated fatty acid ester was more than 4.5mass% based on the total mass of the inkjet ink, caused the unsaturated fatty acid ester itself to be sensed as an odorous substance, resulting in strong odor in an image-formed product.

Inks 1 to 3 of Examples, in which the content of the unsaturated fatty acid ester (butyl oleate) was 0.3mass% or more and 3.0mass% or less based on the total mass of the inkjet ink, could allow for formation of an image less in odor than an image formed from ink 9 of Example in which the content of butyl oleate was 4mass% based on the total mass of the inkjet ink.

Inks 1 to 3 of Examples, in which the ratio of the total mass of the photopolymerization initiator to the total mass of the unsaturated fatty acid ester (butyl oleate) was 0.3 or more and 8 or less, could allow for formation of an image less in odor than an image formed from ink 10 of Example in which the ratio of the total mass of the photopolymerization initiator to the total mass of butyl oleate was 10.

Inks 2 and 5 of Examples, in which the unsaturated fatty acid ester compound had a molecular weight of 500 or less, could allow for formation of an image less in odor than an image formed from ink 8 of Example in which the unsaturated fatty acid ester had a molecular weight of more than 500.

Ink 7 of Example, containing a gelling agent, could allow for formation of an image less in odor than an image formed from ink 1 of Example, containing no gelling agent.

### Industrial Applicability

The actinic radiation-curable inkjet ink of the present invention not only can be suppressed in odor of an image-formed product, but also is high in thermal stability. Thus, the present invention is expected to expand the scope of applications of the actinic radiation-curable inkjet ink, and to contribute to progression and growth of the technique in the art.

Although embodiments of the present invention have been described in detail, it is clearly understood that the same is by way of example only and not limitation, the scope of the present invention should be interpreted by terms of the appended claims.

## Claims

1. An actinic radiation-curable inkjet ink, comprising a photocurable compound, a photopolymerization initiator, and an unsaturated fatty acid ester having no photopolymerizable group, wherein
a content of the unsaturated fatty acid ester is 0.3mass% or more and 4.5mass% or less based on a total mass of the inkjet ink, and
the unsaturated fatty acid ester is a compound having an iodine value of less than 80.

2. The actinic radiation-curable inkjet ink according to claim 1, wherein the content of the unsaturated fatty acid ester is 0.3mass% or more and 3.0mass% or less based on the total mass of the inkjet ink.

3. The actinic radiation-curable inkjet ink according to claim 1 or 2, wherein a ratio of a total mass of the photopolymerization initiator to a total mass of the unsaturated fatty acid ester is 0.3 or more and 8 or less.

4. The actinic radiation-curable inkjet ink according to any one of claims 1 to 3, wherein the unsaturated fatty acid ester is a compound having a molecular weight of 500 or less.

5. The actinic radiation-curable inkjet ink according to any one of claims 1 to 4, further comprising a gelling agent.

6. A method for producing an actinic radiation-curable inkjet ink, comprising
mixing a photocurable compound, a photopolymerization initiator, and an unsaturated fatty acid ester having no photopolymerizable group, wherein
a content of the unsaturated fatty acid ester is 0.3mass% or more and 4.5mass% or less based on a total mass of the inkjet ink, and
the unsaturated fatty acid ester is a compound having an iodine value of less than 80.

7. An image forming method, comprising
discharging a droplet of the actinic radiation-curable inkjet ink according to any one of claims 1 to 5, through a nozzle of an inkjet head, to allow the droplet to land on a surface of a recording medium, and
irradiating, the droplet that has landed, with actinic radiation to cure the droplet.
